# EUROPEAN PATENT SPECIFICATION

(11) **EP 2 418 858 B1**
(45) Date of publication and mention of the grant of the patent: **20.04.2016**
(21) Application number: 11153623.1
(22) Date of filing: 08.02.2011
(51) Int. Cl.: H04N 13/00

(54) **Method for editing three-dimensional image and mobile terminal using the same**
Verfahren zur Bearbeitung eines dreidimensionalen Bildes und mobiles Endgerät damit
Procédé d'édition d'une image tridimensionnelle et terminal mobile l'utilisant

(30) Priority: 11.08.2010 KR 20100077452
(43) Date of publication of application: 15.02.2012
(73) Proprietor: LG Electronics Inc., Seoul 150-721 (KR)
(72) Inventor: KIM, Jonghwan, Incheon (KR)
(74) Representative: Cabinet Plasseraud

(56) References cited:
- EP-A1- 1 549 084
- EP-A1- 2 128 823
- KR-A- 20090 064 832

## Description

### BACKGROUND OF THE INVENTION

### Field of the Invention

The present disclosure relates to an image processing method and, more particularly, to a method for editing a three-dimensional (3D) image and a mobile terminal using the same.

### Description of the Background Art

In general, terminals may be divided into a mobile or portable terminal and a stationary terminal according to whether or not terminals are movable. In addition, mobile terminals may be divided into a handheld terminal and a vehicle mount terminal according to whether or not users can directly carry it around.

As the functions of terminals are becoming more diverse, terminals can support more complicated functions such as capturing images or video, reproducing music or video files, playing games, receiving broadcast signals, and the like. By comprehensively and collectively implementing such functions, mobile terminals are embodied in the form of a multimedia player or device. In order to support and increase functions of the terminals, improvement of structural part and/or software part of terminals may be considered.

In general, a terminal is evolving to have a function of displaying three-dimensional stereoscopic image allowing for a depth perception or stereovision, beyond the level of displaying a two-dimensional image. The user can enjoy a more realistic user interface (UI) or contents through a three-dimensional stereoscopic image.

However, the related art terminal capable of displaying a three-dimensional stereoscopic image does not provide a method allowing the user to conveniently insert or edit desired text in the form of three-dimensional text or the like.

EP2128823 discloses a mobile terminal including means for editing images. EP1549084 discloses means for editing stereoscopic images.

### SUMMARY OF THE INVENTION

Accordingly, one object of the present disclosure is to provide a mobile terminal having an input method which is different from the conventional one.

Another object of the present disclosure is to provide a method for editing a three-dimensional image capable of inserting a three-dimensional object into a three-dimensional image or editing a three-dimensional object and then inserting the same into a three-dimensional image, and a mobile terminal using the same.

To achieve the above objects, there is provided a method according to claim 1 and a terminal according to claim 5.

In the method for editing a 3D image and a mobile terminal using the same according to exemplary embodiments of the present disclosure, a 3D object is inserted or edited and inserted such that it agrees with a 3D stereoscopic image. Thus, the awkwardness when a 2D object is inserted into a 3D image can be eliminated, and more natural image in a user's view point can be provided.

Further scope of applicability of the present disclosure will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The present disclosure will become more fully understood from the detailed description given hereinbelow and the accompanying drawings, which are given by illustration only, and thus are not limitative of the present disclosure, and wherein:
FIG. 1 is a schematic block diagram of a mobile terminal according to an exemplary embodiment of the present disclosure;
FIG. 2 is a view illustrating a screen image when the mobile terminal is in a 3D image editing mode according to an exemplary embodiment of the present disclosure;
FIG. 3 is a view illustrating a function menu with respect to an identified editing target by the mobile terminal according to an exemplary embodiment of the present disclosure;
FIG. 4 is a view illustrating synthesizing of text into an identified editing target by the mobile terminal according to an exemplary embodiment of the present disclosure;
FIG. 5 is a view illustrating synthesizing of text into an identified editing target by the mobile terminal by using a face recognition scheme according to an exemplary embodiment of the present disclosure;
FIG. 6 is a view illustrating synthesizing of a line into an identified editing target by the mobile terminal according to an exemplary embodiment of the present disclosure;
FIG. 7 is a view illustrating synthesizing of a line into an identified editing target selected by a user by the mobile terminal according to an exemplary embodiment of the present disclosure;
FIG. 8 is a view illustrating synthesizing text inputted by the user into selected editing target by the mobile terminal according to an exemplary embodiment of the present disclosure;
FIG. 9 is a view illustrating synthesizing a line inputted by the user into an editing target by differentiating depths of parts of the line by the mobile terminal according to an exemplary embodiment of the present disclosure;
FIG. 10 is a flow chart illustrating the method for adjusting a depth scaling of ari image according to an exemplary embodiment of the present disclosure;
FIG. 11 is a flow chart illustrating the method for adjusting a depth scaling of an image according to another exemplary embodiment of the present disclosure;
FIG. 12 is a flow chart illustrating the method for adjusting a depth scaling of an image according to still another exemplary embodiment of the present disclosure; and
FIG. 13 is a flow chart illustrating the method for adjusting a depth scaling of an image according to yet another exemplary embodiment of the present disclosure.

### DETAILED DESCRIPTION OF THE INVENTION

Embodiments of the present disclosure will be described below in detail with reference to the accompanying drawings, where those components are rendered the same reference number that are the same or are in correspondence, regardless of the figure number, and redundant explanations are omitted. In describing the present disclosure, if a detailed explanation for a related known function or construction is considered to unnecessarily divert the gist of the present disclosure, such explanation has been omitted but would be understood by those skilled in the art. In the following description, usage of suffixes such as 'module', 'part' or 'unit' used for referring to elements is given merely to facilitate explanation of the present disclosure, without having any significant meaning by itself. In describing the present disclosure, if a detailed explanation for a related known function or construction is considered to unnecessarily divert the gist of the present disclosure, such explanation has been omitted but would be understood by those skilled in the art. The accompanying drawings of the present disclosure aim to facilitate understanding of the present disclosure and should not be construed as limited to the accompanying drawings.

### Overall configuration of a mobile terminal

The mobile terminal associated with the present disclosure may include mobile phones, smart phones, notebook computers, digital broadcast receivers, PDAs (Personal Digital Assistants), PMPs (Portable Multimedia Player), navigation devices, and the like. It would be understood by a person in the art that the configuration according to the embodiments of the present disclosure can be also applicable to the fixed types of terminals such as digital TVs, desk top computers, or the like, except for any elements especially configured for a mobile purpose.

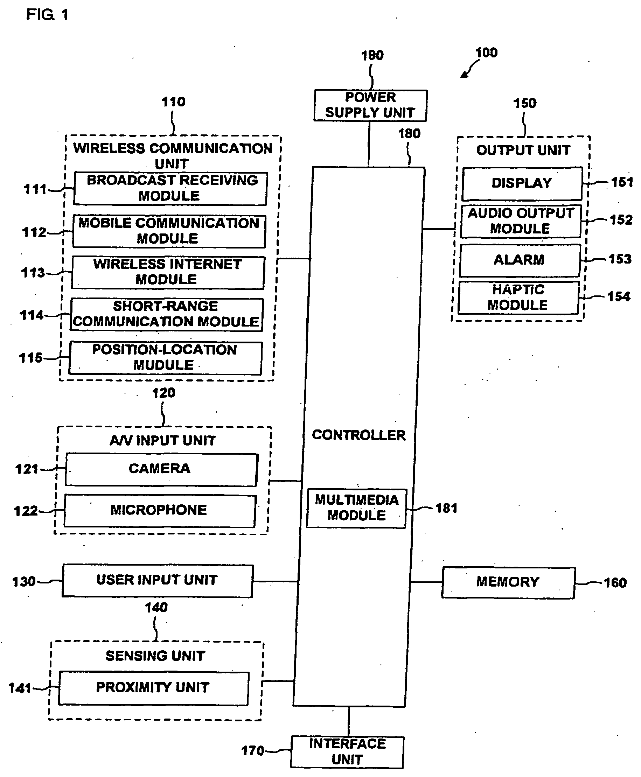

FIG. 1 is a schematic block diagram of a mobile terminal according to an embodiment of the present disclosure.

The mobile terminal 100 may include a wireless communication unit 110, an A/V (Audio/Video) input unit 120, a user input unit 130, a sensing unit 140, an output unit 150, a memory 160, an interface unit 170, a controller 180, and a power supply unit 190, and the like. FIG. 1 shows the mobile terminal as having various components, but it should be understood that implementing all of the illustrated components is not a requirement Greater or fewer components may alternatively be implemented.

The elements of the mobile terminal will be described in detail as follows.

The wireless communication unit 110 typically includes one or more components allowing radio communication between the mobile terminal 100 and a wireless communication system or a network in which the mobile terminal is located. For example, the wireless communication unit 110 may include at least one of a broadcast receiving module 111, a mobile communication module 112, a wireless Internet module 113, a short-range communication module 114, and a position-location module 115.

The broadcast receiving module 111 receives broadcast signals and/or broadcast associated information from an external broadcast management server (or other network entity) via a broadcast channel. The broadcast associated information may refer to information associated with a broadcast channel, a broadcast program or a broadcast service provider. The broadcast associated information may also be provided via a mobile communication network and, in this case, the broadcast associated information may be received by the mobile communication module 112. Broadcast signals and/or broadcast-associated information received via the broadcast receiving module 111 may be stored in the memory 160 (or anther type of storage medium).

The mobile communication module 112 transmits and/or receives radio signals to and/or from at least one of a base station (e.g., access point, Node B, and the like), an external terminal (e.g., other user devices) and a server (or other network entities). Such radio signals may include a voice call signal, a video call signal or various types of data according to text and/or multimedia message transmission and/or reception.

The wireless Internet module 113 supports wireless Internet access for the mobile terminal. This module may be internally or externally coupled to the terminal. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), LTE (Long Term Evolution), LTE-A (Long Term Evolution Advanced) or the like.

The short-range communication module 114 is a module for supporting short range communications. Some examples of short-range communication technology include BLUETOOTH, Radio Frequency IDentification (RFID), Infrared Data Association (IrDA), Ultra-WideBand (UWB), ZIGBEE, and the like.

The position-location module 115 is a module for checking or acquiring a location (or position) of the mobile terminal. A typical example of the position-location module is a GPS (Global Positioning System).

With reference to FIG. 1, the A/V input unit 120 receives an audio or image signal. The AN input unit 120 may include a camera 121 (or other image capture device) or a microphone 122 (or other sound pick-up device). The camera 121 processes image frames of still pictures or video obtained by an image capture device in a video capturing mode or an image capturing mode. The processed image frames may be displayed on a display unit 151 (or other visual output device).

The image frames processed by the camera 121 may be stored in the memory 160 (or other storage medium) or transmitted via the wireless communication unit 110. Two or more cameras 121 may be provided according to the configuration of the mobile terminal.

The microphone 122 may receive sounds (audible data) via a microphone (or the like) in a phone call mode, a recording mode, a voice recognition mode, and the like, and can process such sounds into audio data. The processed audio (voice) data may be converted for output into a format transmittable to a mobile communication base station (or other network entity) via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 (or other user input device) may generate input data from commands entered by a user to control various operations of the mobile terminal. The user input unit 130 may include a keypad, a dome switch, a touch pad (e.g., a touch sensitive member that detects changes in resistance, pressure, capacitance, and the like, due to being contacted), a jog wheel, a jog switch, and the like.

The sensing unit 140 (or other detection means) detects a current status (or state) of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, and the like, and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device. The sensing unit 140 may include a proximity unit 141.

The output unit 150 is configured to provide outputs in a visual, audible, and/or tactile manner (e.g., audio signal, image signal, alarm signal, vibration signal, etc.). The output unit 150 may include the display unit 151, an audio output module 152, an alarm unit 153, a haptic module 154, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call or other communication (such as text messaging, multimedia file downloading, and the like.). When the mobile terminal 100 is in a video call mode or image capturing mode, the display unit 151 may display a captured image and/or received image, a UI or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, an e-ink display, or the like.

Some of them may be configured to be transparent or light-transmissive to allow viewing of the exterior, which may be called transparent displays. A typical transparent display may be, for example, a TOLED (Transparent Organic Light Emitting Diode) display, or the like. Through such configuration, the user can view an object positioned at the rear side of the terminal body through the region occupied by the display unit 151 of the terminal body.

The mobile terminal 100 may include two or more display units (or other display means) according to its particular desired embodiment. For example, a plurality of display units may be separately or integrally disposed on one surface of the mobile terminal, or may be separately disposed on mutually different surfaces.

Meanwhile, when the display unit 151 and a sensor (referred to as a 'touch sensor', hereinafter) for detecting a touch operation are overlaid in a layered manner to form a touch screen, the display unit 151 may function as both an input device and an output device. The touch sensor may have a form of a touch film, a touch sheet, a touch pad, and the like.

The touch sensor may convert pressure applied to a particular portion of the display unit 151 or a change in the capacitance or the like generated at a particular portion of the display unit 151 into an electrical input signal. The touch sensor may detect the pressure when a touch is applied, as well as the touched position and area.

When there is a touch input with respect to the touch sensor, a corresponding signal (signals) are transmitted to a touch controller. The touch controller processes the signals and transmits corresponding data to the controller 180. Accordingly, the controller 180 may recognize which portion of the display unit 151 has been touched.

With reference to FIG. 1, a proximity unit 141 may be disposed within or near the touch screen. The proximity unit 141 is a sensor for detecting the presence or absence of an object relative to a certain detection surface or an object that exists nearby by using the force of electromagnetism or infrared rays without a physical contact. Thus, the proximity unit 141 has a considerably longer life span compared with a contact type sensor, and it can be utilized for various purposes.

Examples of the proximity unit 141 may include a transmission type photoelectric sensor, a direct reflection type photoelectric sensor, a mirror-reflection type photo sensor, an RF oscillation type proximity sensor, a capacitance type proximity sensor, a magnetic proximity sensor, an infrared proximity sensor, and the like. In case where the touch screen is the capacitance type, proximity of the pointer is detected by a change in electric field according to the proximity of the pointer. In this case, the touch screen (touch sensor) may be classified as a proximity unit.

The audio output module 152 may convert and output sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a receiver, a speaker, a buzzer, or other sound generating device.

The alarm unit 153 (or other type of user notification means) may provide outputs to inform about the occurrence of an event of the mobile terminal 100. Typical events may include call reception, message reception, key signal inputs, a touch input etc. In addition to audio or video outputs, the alarm unit 153 may provide outputs in a different manner to inform about the occurrence of an event. For example, the alarm unit 153 may provide an output in the form of vibrations (or other tactile or sensible outputs). When a call, a message, or some other incoming communication is received, the alarm unit 153 may provide tactile outputs (i.e., vibrations) to inform the user thereof. By providing such tactile outputs, the user can recognize the occurrence of various events even if his mobile phone is in the user's pocket. Outputs informing about the occurrence of an event may be also provided via the display unit 151 or the audio output module 152. The display unit 151 and the audio output module 152 may be classified as a part of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, and the like, an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or XD memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of person using the mobile terminal 100 and may include a user identity module (UIM), a subscriber identity module (SIM), a universal subscriber identity module (USIM), and the like. In addition, the device having the identification module (hereinafter referred to as 'identifying device') may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal 100. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

### Method for processing user input with respect to mobile terminal

The user input units 130 is manipulated to receive a command for controlling the operation of the mobile terminal 100 and may include a plurality of manipulation units 131 and 132. The manipulation units 131 and 132 may be generally referred to as a manipulating portion, and various methods and techniques can be employed for the manipulation portion so long as they can be operated by the user in a tactile manner.

The display unit 151 can display various types of visual information. These information may be displayed in the form of characters, numerals, symbols, graphic or icons. In order to input such information, at least one of the characters, numerals, symbols, graphic and icons may be displayed in predetermined arrangement in the form of a keypad. Also, the keypad can be referred to as a 'soft key'.

The display unit 151 may be operated as an entire area or may be divided into a plurality of regions so as to be operated. In the latter case, the plurality of regions may be configured to be operated in association with each other.

For example, an output window and an input window may be displayed at an upper portion and a lower portion of the display unit 151. The output window and the input window are regions allocated to output or input information, respectively. Soft keys marked by numbers for inputting a phone number or the like may be outputted to the input window. When a soft key is touched, a number or the like corresponding to the touched soft key may be displayed on the output window. When the manipulation unit is manipulated, a call connection to the phone number displayed on the output window may be attempted or text displayed on the output window may be inputted to an application.

The display unit 151 or a touch pad may be configured to receive a touch through scrolling. The user can move an entity displayed on the display unit 151, for example, a cursor or a pointer positioned on an icon or the like, by scrolling the touch pad. In addition, when the user moves his finger on the display unit 151 or on the touch pad, a path along which the user's finger moves may be visually displayed on the display unit 151. This can be useful in editing an image displayed on the display unit 151.

A certain function of the terminal may be executed when the display unit 151 (touch screen) and the touch pad are touched together within a certain time range. For example, the display unit 151 and the touch pad may be touched together when the user clamps the terminal body by using his thumb and index fingers. The certain function may be activation or deactivation of the display unit 151 or the touch pad.

Exemplary embodiments related to a control method that can be implemented in the terminal configured as described above will now be described with reference to the accompanying drawings. The exemplary embodiments to be described may be solely used or may be combined to be used. Also, the exemplary embodiments to be described may be combined with the foregoing user interface (UI) so as to be used.

Concepts or terms required to explain the exemplary embodiments of the present disclosure will now be described.

### Three-dimensional (3D) stereoscopic image

-A three-dimensional (3D) stereoscopic image is an image with which the user may feel a gradual depth and reality of a portion where an object is positioned on a monitor or a screen in the same way as a real space. The 3D stereoscopic image is implemented by using a binocular disparity. Binocular disparity refers to a parallax obtained by the positions of a user's two eyes away by about 65 millimeters from each other. When two eyes see mutually different 2D images, and when the images are transferred to the brain and merged, the user may feel the depth and reality of a 3D stereoscopic image.

The 3D display methods include a stereoscopic method (glass method), an auto-stereoscopic method (glassless method), a projection method (holographic method), and the like. The stereoscopic method largely used for home television receivers includes a Wheatstone stereoscopic method, and the like. The auto-stereoscopic method largely used for mobile terminals or the like includes a parallax barrier method, a lenticular method, and the like. The projection method includes a reflective holographic method, a transmission type holographic method, and the like.

### Configuration and display of 3D stereoscopic image

In general, a 3D stereoscopic image includes a left image (left eye image) and a right image (right eye image). The method of configuring a 3D stereoscopic image may be classified into a top-down scheme in which a left image and a right image are disposed up and down in one frame, an L-to-R (left-to-right, side by side) scheme in which a left image and a right image are disposed left and right in one frame, a checker board scheme in which left image fragments and right eye fragments are disposed in a tile form, an interlaced scheme in which a left image and a right image are alternately disposed by column or by row, a time division (time sequential, frame by frame) scheme in which a left eye image and a right eye image are alternately displayed by time, and the like.

### 3D depth scaling

A 3D depth scaling or a 3D depth value refers to an indicator indicating the 3D distance between objects within an image. For example, when a depth scaling is defined as 256 levels so a maximum value is 255 and a minimum value is 0, a higher value represents a position closer to a viewer or a user.

In general, a 3D stereoscopic image including a left image and a right image captured through two camera lenses allows the viewer to feel the depth scaling due to the parallax between the left and right images generated by the foregoing binocular disparity. A multi-view image also allows the viewer to feel a depth scaling by using a plurality of images, each having a different parallax, captured by a plurality of camera lenses.

Unlike the 3D stereoscopic image or the multi-view image, which is generated as an image having a depth scaling from the beginning, an image having a depth scaling may be generated from a 2D image.

For example, a depth image-based rendering (DIBR) scheme is a method in which an image of a new point of view, which does not exist yet, is created by using one or more 2D images and a corresponding depth map. The depth map provides depth scaling information regarding each pixel in an image. An image producer may calculate the parallax of an object displayed on a 2D image by using the depth map and may shift or move the corresponding object to the left or right by the calculated parallax to generate an image of a new point of view.

The present exemplary embodiment can be applicable to a 2D image (an image, a graphic object, a partial screen image, and the like) as well as to the 3D stereoscopic image (an image, a graphic object, a partial screen image, and the like) which is generated as an image having a depth scaling from the beginning, For example, in the exemplary embodiment of the present disclosure, 3D information (i.e., a depth map) may be generated from a 2D image by using the known 3D image creation scheme, an image (i.e., a left image and a right image) of a new point of view may be generated by using the foregoing DIBR scheme or the like, and then the images may be combined to generate a 3D image.

In the following description, it is assumed that a depth scaling of 3D image is adjusted by the mobile terminal 100. However, the case of adjusting a 3D image by the mobile terminal 100 is merely for explaining an exemplary embodiment disclosed in this document and it should be understood that the technical idea of the disclosed exemplary embodiment of the present disclosure is not limited thereto.

Namely, when a depth scaling of a 2D image is to be adjusted by the mobile terminal 100, a 2D image can be displayed three-dimensionally through the process of generating the depth map or the 3D image as described above. Thus, in describing a '3D image' hereinafter, it should be construed that the 3D image means to include a '2D image' although the 2D image is not mentioned. Here, the 2D image may be a 2D graphic object, a 2D partial screen image, and the like.

### Method for editing 3D image and mobile terminal using the same

The present disclosure proposes a method for editing a 3D image according to an exemplary embodiment of the present disclosure, in which a 3D object is inserted or edited so as to agree with a 3D image or a 3D stereoscopic image, thereby providing more natural image visually in a viewpoint of the user. Here, the 3D object refers to 3D graphic object such as 3D text (or 3D speech bubble), a 3D icon, a 3D image, a 3D video, a 3D diagram, or the like.

In the method for editing a 3D image according to an exemplary embodiment of the present disclosure, in inserting the 3D object into the 3D image, an insertion target within the 3D image is changed into an editing state and then the 3D object may be inputted, or after the 3D object is inputted to a 3D image and then an insertion target may be designated.

In the method for editing a 3D image according to an exemplary embodiment of the present disclosure, a left image or a right image of a person existing within a 3D image may be compared with a previously acquired 2D personal image to perform a face recognition, and when the face recognition is successful, information regarding the person may be inserted into the 3D image.

In the method for editing a 3D image according to an exemplary embodiment of the present disclosure, in inserting a 3D object onto a plurality of objects each having a different depth scaling within the 3D image, the depth scaling of each portion of the 3D object to be inserted may be adjusted correspondingly according to a depth scaling of each object and then inserted.

Meanwhile, among the 3D objects, text may be inputted according to methods such as a keypad input, a virtual keypad input, a handwriting recognition, a gesture recognition, a predetermined text selection, and the like, after a function menu (a control menu) such as 'text', 'speech bubble', and the like, is executed.

Also, among the 3D objects, an icon, an image or a video may be inputted according to methods such as selecting a predetermined icon or selecting a photo image, an image, or a video included in an album or a gallery, or the like, after the function menus such as 'stamp', 'album', 'gallery', or the like, is executed. Also, among the 3D objects, a line or a diagram may be inputted according to methods such as a touch input or selecting a predetermined diagram, after a function menu such as 'draw', 'pen', or the like, is executed.

The method for editing a 3D image according to an exemplary embodiment of the present disclosure may be applicable to editing of a stereoscopic image including a plurality of images each having a different view point. For example, the method for editing a 3D image according to an exemplary embodiment of the present disclosure may be applicable to a stereoscopic image including a left image and a right image, a multi-view image including a plurality of images each having a different view point of a camera lens, and the like.

In the following description, it is assumed that the mobile terminal according to an exemplary embodiment of the present disclosure edits a stereoscopic image including a left image and a right image. However, it should be understood that the configuration of editing a stereoscopic image by the mobile terminal 100 is merely for explaining an exemplary embodiment of the present disclosure, and the technical idea of the present disclosure as disclosed herein is not limited the such exemplar embodiment.

For example, the process of editing a left image or a right image of a stereoscopic image by the mobile terminal 100 according to an exemplary embodiment of the present disclosure may be applicable to editing one view point image included in a mufti-view image.

Hereinafter, the operations of the mobile terminal 100 according to an exemplary embodiment of the present disclosure will be described according to a method in which an insertion target within a 3D image is changed into an editing state and then a 3D object is inputted, a method in which a 3D object is inserted onto a 3D image and then an insertion target is designated, and a method of adjusting a depth scaling when a plurality of insertion target objects are provided.

First, the case in which the mobile terminal 100 changes an insertion target within a 3D image into an editing state and then inputs a 3D object will now be described.

### Inputting of 3D object after changing insertion target within 3D image into editing state

The mobile terminal 100 according to an exemplary embodiment of the present disclosure may change an insertion target within a 3D image into an editing mode and then inserts or edits a 3D object.

In detail, the controller 180 identifies an editing target from a 3D image. To this end, the display unit 151 displays the 3D image, and the controller 180 identifies an editing target according to a user input or a user selection.

For example, when the display unit 151 displays the 3D image and the user selects or inputs the editing target from within the 3D image, the controller 180 may display a function menu allowing the user to insert or edit a graphic object.

Here, the editing target refers to a screen area or a graphic object into which a 3D object is to be inserted, a screen area or a graphic object in which the inserted 3D object is to be edited, or the like. For example, when the 3D image shows the whole view of the interior of an art gallery, pictures, sculptures, spectators, doors, windows, chairs, desks, and the like, within the art gallery may be the editing targets.

For example, when the user selects an editing target through a touch input or a proximity touch, the controller 180 may identify an area or a graphic object in which the touch input or the proximity touch has occurred as the editing target. Alternatively, when the user inputs a certain area on the screen through dragging, by using a multi-touch, and the like, the controller 180 may identify the certain area or a graphic object positioned within the certain area as the editing target.

In this case, the controller 180 may identify the editing target by area (e.g., a quadrangular area, a circular area, an oval area, and the like), or may identify the editing target by objects displayed on the screen. When a 3D image is configured on the basis of a vector graphics, the controller 180 may easily separately identify an object selected as the editing target. Alternatively, when a 3D image is configured on the basis of bitmap graphics, the controller 180 may separately identify an object selected as the editing target according to an image processing algorithm such as an edge detection or the like.

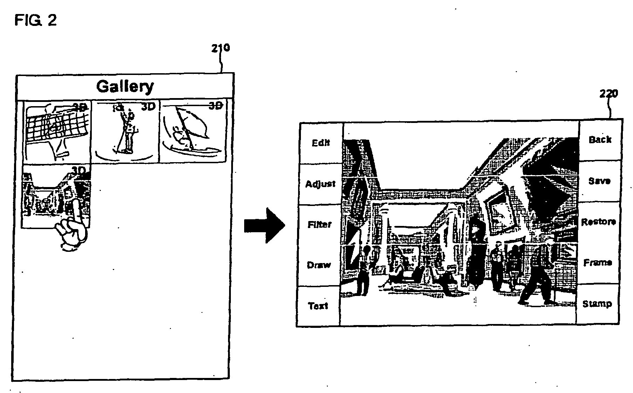

FIG. 2 is a view illustrating a screen image when the mobile terminal is in a 3D image editing mode according to an exemplary embodiment of the present disclosure.

As shown in FIG. 2, when the user selects one of the 3D images displayed on the screen image of a gallery (210), the mobile terminal 100 may display a function menu that can be performed with respect to the selected 3D image (220). In FIG. 2, the mobile terminal 100 displays function menus such as 'Edit', 'Adjust', 'Filter', 'Draw', 'Text', 'Back', 'Save', 'Restore', 'Frame' and 'Stamp'.

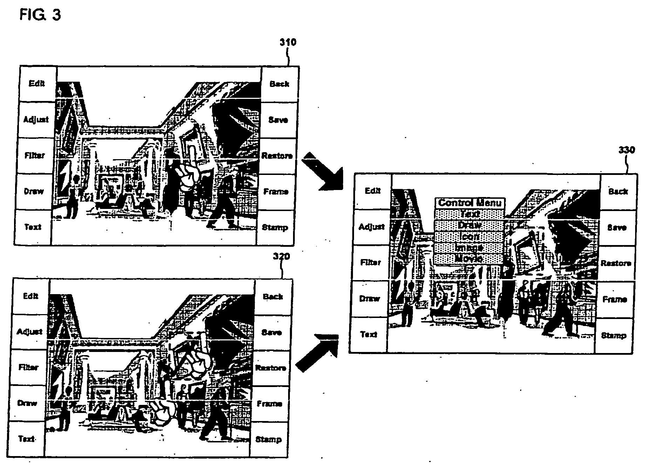

FIG. 3 is a view illustrating a function menu with respect to an identified editing target by the mobile terminal according to an exemplary embodiment of the present disclosure.

As shown in FIG. 3, when the user touches a particular area or a graphic object (the picture in FIG. 3) (310), or when the user inputs a particular area or an area including a graphic object (320), the mobile terminal 100 may display a function menu that can be executed for the selected particular area or the selected graphic object (330).

The controller 180 edits a first image of the identified editing target. Here, the first image refers to a left image or a right image of the identified editing target. A second image is an image corresponding to the first image, which refers to a right image corresponding to the left image of the identified editing target or a left image corresponding to the right image of the identified editing target editing target.

In editing the first image, the display unit 151 may display a first image of the identified editing target, and the controller 180 may perform an editing function on the displayed first image according to a user input or a user selection.

Or, when the controller 180 displays a function menu that can be performed with respect to the identified editing target, the user, who has selected a particular function from the function menu, may perform a certain editing and the display unit 151 may display the first image to which the certain editing has been applied.

In particular, the controller 180 may synthesize a graphic object into the first image. For example, the controller 180 may insert a graphic object into the first image or edit the graphic object inserted in the first image. Here, the graphic object may be text, a line, a diagram, an icon, an image, a video, and the like.

The controller 180 may synthesize the graphic object, which has been synthesized into the first image, into the second image in consideration of binocular disparity. Also, the controller 180 may apply the synthesized first image and the synthesized second image into the 3D image.

Or, in editing the first image, the controller 180 may calculate 3D position information of the identified editing target corresponding to a first observation angle of the identified editing target. For example, the first observation angle may be an angle at which the user views the original 3D image at a front side. The controller 180 may generate a 3D graphic object according to the 3D position information. The controller 180 may synthesize the generated 3D graphic object into the first image.

Or, in editing the first image, the controller 180 may calculate 3D position information of the identified editing target corresponding to the first observation angle of the identified editing target. And, the controller 180 may transform the identified editing target such that it corresponds to a second observation angle by using the 3D position information. For example, the second observation angle may be an angle at which the user views the front side of the identified editing target.

The controller 180 may edit the first image of the transformed editing target according to a user input. The controller 180 may apply the same editing as the editing with respect to the first image of the transformed editing target to the second image in consideration of a binocular disparity. And, the controller 180 may transform again the transformed editing target such that it corresponds to the original first observation angle by using the 3D position information.

Hereinafter, the operation of the controller 180 will now be described in detail by using the case in which the first observation angle is an angle at which the user views a 3D image showing the internal whole view of the art gallery at a front side and the second observation angle is an angle at which a spectator withing the 3D image views the picture hung on the wall at a front side, as an example.

The controller 180 may calculate 3D position information corresponding to a first observation angle of the editing target from a left image or a right image of the identified editing target. Here, the calculated 3D position information may be an X-axis rotational angle X1, a Y-axis rotational angle Y1, and a Z-axis depth value Z1 of the editing target.

The controller 180 may transform the left image or the right image such that they correspond to the second observation angle by using the 3D position information. Namely, the controller 180 may transform the left image or the right image of the editing target according to an X-axis rotational angle X2, a Y-axis rotational angle Y2, and a Z-axis depth value Z2, namely, 3D position information corresponding to the second observation angle.

The controller 180 may insert or edit a graphic object such as 3D text or the like into the left image or the right image of the transformed editing target, according to a user input. The graphic object is synthesized into the corresponding right image or the left image, as well as the left image or the right image of the transformed editing target. In this case, the controller 180 synthesizes the graphic object into the right image or the left image in consideration of a binocular disparity.

The controller 180 may transform again the transformed editing target such that it corresponds to the first observation angle. In this case, the controller 180 may reset the transformed editing target according to the X-axis rotational angle X1, the Y-axis rotational angle Y1, and the Z-axis depth value Z1 of the editing target, or may set by restoring by the variation between the X1/Y1/Z1 and X2/Y2/Z2. The editing target which has been transformed again according to the original first observation angle may be reflected (or synthesized) into the 3D image so as to be displayed three-dimensionally.

In addition, the controller 180 may adjust the position or direction (the X-axis rotational angle, the Y-axis rotational angle, the Z-axis depth value) of the inserted or edited graphic object according to a user's touch input, a proximity touch, a touch-and-drag, a multi-touch input, and the like.

As described above, because the controller 180 transforms the identified editing target such that it corresponds to the appropriate second observation angle, the user can perform input a graphic object at an accurate position with respect to the identified editing target

In the above description, the controller 180 synthesizes the graphic object into the first and second images of the editing target, but the controller 180 may synthesize the graphic object only into the first image of the transformed editing target and generate a second image with respect to the synthesized first image in consideration of a binocular disparity.

For example, the controller 180 may insert a graphic object only into the left image of the editing target and generate a corresponding right image according to a depth image based rendering (DIVR) scheme. The controller 180 may transform the transformed editing target such that it corresponds to the initial first observation angle by using 3D position information.

After editing the editing target, the controller 180 applies the edited first image and the second image corresponding to the edited first image to the 3D image. In detail, the controller 180 may synthesize the editing target image including the first and second image into the 3D image.

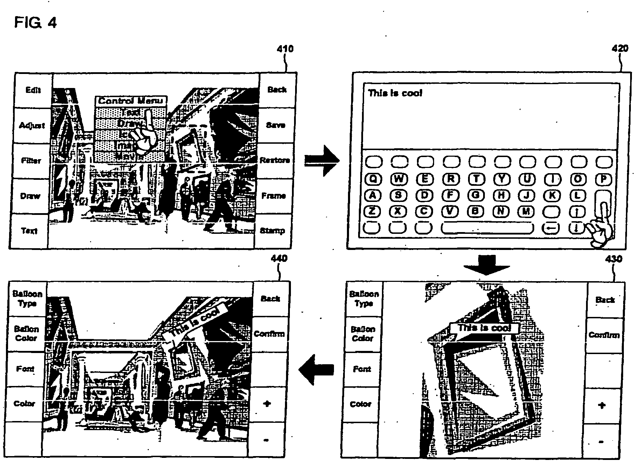

FIG. 4 is a view illustrating synthesizing of text into an identified editing target by the mobile terminal according to an exemplary embodiment of the present disclosure.

As shown in FIG. 4, when the user selects a text input from a function menu displayed with respect to an identified editing target (a picture frame in FIG. 4) (410) and inputs text by using a virtual keypad (420), the mobile terminal 100 synthesizes a speech bubble including the inputted text into a magnified-displayed editing target and displays it (430), and when the editing is completed, displays the speech bubble-synthesized 3D image (440).

In this case, the mobile terminal 100 may set the font or color of the text or set the type, the color, or the background of the speech bubble, or magnify or reduce the editing target on the screen, or may shift or move the position of the editing target in a drag-and-drop manner, according to a user selection or a user input.

In FIG. 4, the mobile terminal 100 magnifies and displays the frame, the identified editing target, as it is, but as described above, the mobile terminal 100 may transform the picture of the frame in a direction in which the user views it at a front side, and magnify and display the same.

Meanwhile, the mobile terminal 100 may automatically adjust the position and direction of the text such that it agrees with the 3D position or direction of the editing target (in FIG. 4, the mobile terminal 100 automatically adjusts the direction of the text according to a tilt direction of the frame, the editing target) or may adjust the position or direction of the text according to a user input

Hereinafter, a method for editing a 3D image using a face recognition scheme as a modification of the case in which the mobile terminal 100 changes an insertion target within a 3D image into an editing state and then inputs it will now be described.

The display unit 151 displays a-3D image including a person.

The controller 180 acquires a first image (a left image or a right image) of the identified person from the 3D image. In particular, the controller 180 may identify a person selected by the user through a touch input or the like from the 3D image or a person included in a selected area of the 3D image.

The controller 180 searches a database for a 2D person photo image which corresponds with (namely, which is identical or similar to) the first image. The database may be an internal database of an address list, a contact number, a phone book, and the like, installed in the mobile terminal 100, or may be an external database which can be connected through the wireless communication unit 110.

When the searching is successful and a 2D person photo image which corresponds with the first image is found, the controller 180 acquires information associated with the 2D person photo image from the database. The information associated with the 2D person photo image may include a name, an address, a wired/wireless phone number, an e-mail address, a messenger ID, a memo, a birthday, and the like.

The controller 180 visually synthesizes the acquired information into the first image and applies the synthesized first image and a second image corresponding to the synthesized first image into the 3D image. In this case, the controller 180 may synthesize the acquired information into the second image in consideration of a binocular disparity and apply the synthesized first image and the synthesized second image to the 3D image.

The controller 180 may visually synthesize the acquired information in the form of a 3D graphic object such as 3D text (or a 3D speech bubble), a 3D icon, a 3D image, a 3D video, a 3D diagram, and the like, into the first image.

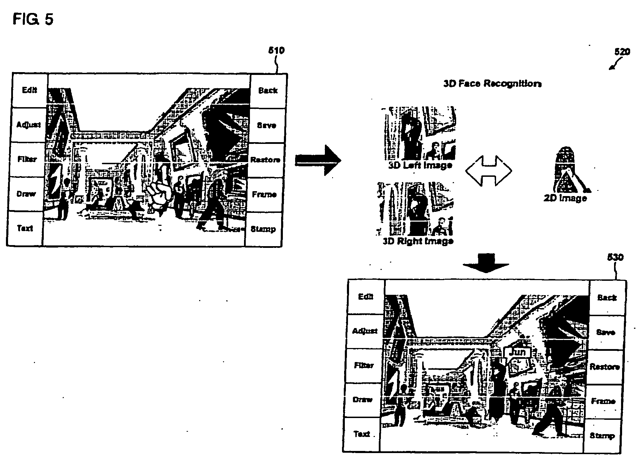

FIG. 5 is a view illustrating synthesizing of text into an identified editing target by the mobile terminal by using a face recognition scheme according to an exemplary embodiment of the present disclosure.

As shown in FIG. 5, when the user selects a person (in particular, a face part), as an editing target, from a 3D image (510), the mobile terminal 100 searches the database for a 2D person image (photo image) which corresponds with a left image or a right image of the 3D person image by using a face recognition scheme (520).

When the 2D person image (photo image) which corresponds with the left image or the right image of the 3D person image is found, the mobile terminal 100 synthesizes information (in FIG. 5, 'Jun', the name of the person) associated with the corresponding 2D person image (photo image) in the form of a speech bubble into the 3D image (530).

The process in which the controller 180 applies the synthesized first image and the second image corresponding to the synthesized first image to the 3D image can be similarly understood to the case in which the mobile terminal 100 changes the insertion target within the 3D image into an editing state and inputs the 3D object as described above with reference to FIGS. 1 to 4, so a detailed description thereof will be omitted.

A case in which the mobile terminal 100 inputs a 3D object on a 3D image and then designates an insertion target will now be described.

### Inputting of 3D object on 3D image and then designating an insertion target

The mobile terminal 100 according to an exemplary embodiment of the present disclosure may inputs a 3D object on a 3D image and then designate an insertion target within the 3D image.

In detail, the display unit 151 displays a 3D image.

The controller 180 receives a graphic object to be synthesized, and identifies a synthesizing target from the 3D image. In this case, the controller 180 discriminately displays a target into which the graphic object can be synthesized and identify a target selected or inputted by the user as the synthesizing target.

In particular, when the graphic object is shifted or moved on the 3D image by the user in a touch-and-drag manner or the like, the controller 180 may discriminately display the target that can be synthesized among targets close to the graphic object through an edge display, a highlight display, an activation display, or the like.

The controller 180 may receive a graphic object to be inserted into the 3D image from the user, and automatically identify a synthesizing target in consideration of the position or direction of the inputted graphic object or identify it according to a user input or a user selection.

The controller then synthesizes the inputted graphic object into the identified synthesizing target. The controller 180 may adjust the 3D position or direction (an X-axis rotational angle, a Y-axis rotational angle, a Z-axis depth value) of the synthesizing target in the 3D image according to a user's touch input, a proximity touch, a touch-and-drag, a multi-touch, and the like.

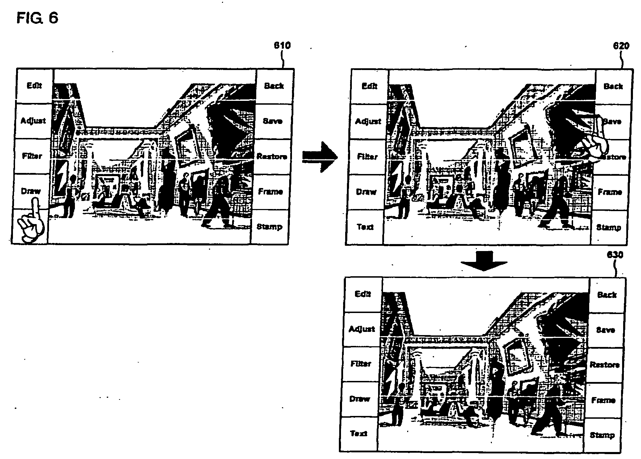

FIG. 6 is a view illustrating synthesizing of a line into an identified editing target by the mobile terminal according to an exemplary embodiment of the present disclosure.

As shown in FIG. 6, when the user selects a 'draw' function menu (610) and draws a horizontal line on a picture frame appearing on the 3D image in a draw mode (620), the mobile terminal 100 adjusts the angle of the horizontal line according to the 3D position (the X-axis rotational angle, the Y-axis rotational angle, the Z-axis depth value) of the picture frame, and synthesizes the horizontal line into the picture frame (630).

Or, although not shown in FIG. 6, when the user draws a horizontal line at a certain position of the 3D image in the draw mode and shifts the horizontal line to the picture frame in a drag-and-drop manner or the like, the mobile terminal 100 may adjust the angle of the horizontal line and synthesize it into the picture frame in a similar manner as described above.

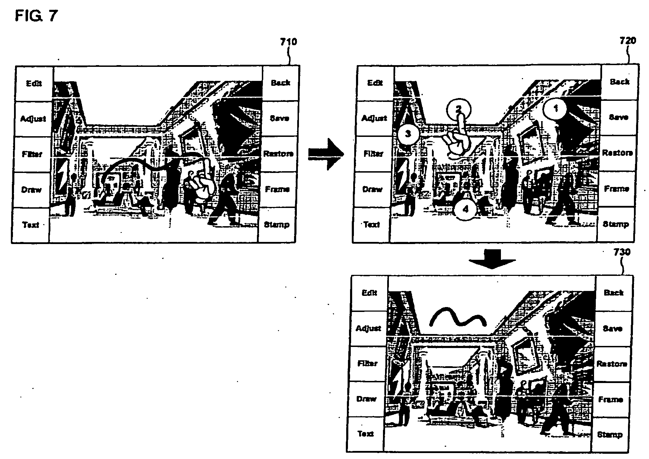

FIG. 7 is a view illustrating synthesizing of a line into an identified editing target selected by a user by the mobile terminal according to an exemplary embodiment of the present disclosure.

As shown in FIG. 7, when the user draws a line at a certain position of a 3D image in the draw mode (710), the mobile terminal 100 marks those that can be an editing target (in FIG. 7, ceiling glass) among areas or objects appearing on the 3D image by markers ('1', '2', '3', '4') (720).

When the user selects one of the markers (720), the mobile terminal 100 automatically adjusts the position or angle of the line correspondingly according to the 3D position (the X-axis rotational angle, the Y-axis rotational angle, the Z-axis depth value) of the editing target, and synthesizes the line into the editing target (730).

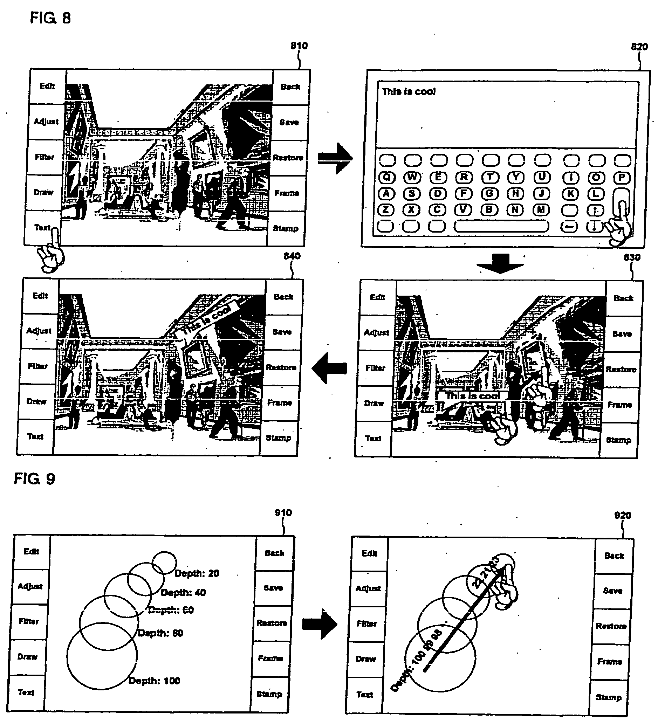

FIG. 8 is a view illustrating synthesizing text inputted by the user into selected editing target by the mobile terminal according to an exemplary embodiment of the present disclosure.

As shown in FIG. 8, when the user selects a 'text' function menu (810) and inputs text in a text input mode (820), the mobile terminal 100 displays a speech bubble including the text at a certain position of a 3D image (830). When the user shifts or moves the speech bubble to an editing target in a drag-and-drop manner (830), the mobile terminal 100 automatically adjusts the position or the angle of the speech bubble according to the 3D position (the X-axis rotational angle, the Y-axis rotational angle, the Z-axis depth value) of the editing target and synthesizes the speech bubble into the editing target (840).

The case in which the mobile terminal 100 inputs a 3D object on a 3D image and then designates an insertion target can be similarly understood to the case in which the mobile terminal 100 changes the insertion target within the 3D image into an editing state and inputs the 3D object as described above with reference to FIGS. 1 to 5, so a detailed description thereof will be omitted.

The case in which the mobile terminal 100 adjusts a depth scaling of an object to be inserted when a plurality of editing target objects are provided will now be described.

### Adjusting of depth scaling in case of a plurality of editing target objects

In inserting a 3D object into a plurality of objects each having a different scaling within a 3D image, the mobile terminal according to another exemplary embodiment of the present disclosure may adjust the depth scaling of each part of a 3D object such that it corresponds with a depth scaling of each object, and insert the same.

In detail, the display unit 151 displays a 3D image. The controller 180 receives a graphic object to be synthesized, and identifies a plurality of editing targets each having a different depth scaling in the 3D image.

The controller 180 synthesizes the inputted graphic object into the editing target such that the depth scaling of the graphic object has a different depth scaling by the parts overlapping with each of the synthesizing targets. In this case, the controller 180 may visually synthesize the graphic object into a first image and a second image of the editing target.

FIG. 9 is a view illustrating synthesizing a line inputted by the user into an editing target by differentiating depths of parts of the line by the mobile terminal according to an exemplary embodiment of the present disclosure.

As shown in FIG. 9, when the depth scalings of circles, the editing target objects of the 3D image, are different to be 100, 80, 60, 40, and 20 (910), the user may input a line on the circles in the draw mode (920).

In this case, the mobile terminal 100 may synthesize the line such that the depth scalings are gradually differentiated by parts of the line according to the depths of the respective circles. In FIG. 9, the mobile terminal 100 may perform synthesizing by setting the depth scalings as 100, 99, 98, ..., 22, 21, and 20 from one end to the other end of the line.

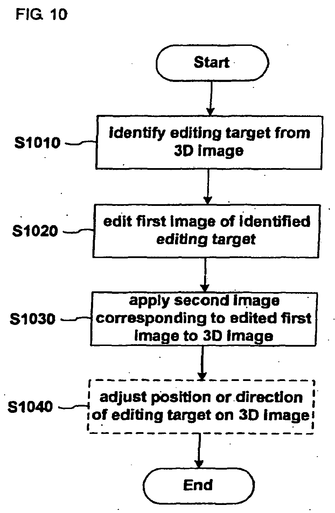

FIG. 10 is a flow chart illustrating the process of a method for adjusting a depth scaling of an image according to an exemplary embodiment of the present disclosure.

With reference to FIG. 10, first, the mobile terminal 100 identifies an editing target from a 3D image (step S1010). Here, the 3D image includes a first image and a second image reflecting a binocular disparity. In particular, the mobile terminal 100 may identify the editing target selected through a user's touch input, a proximity touch, or area input.

Next, the mobile terminal 100 edits the first image of the identified editing target (step S1020). Here, the first image may be a left image or a right image of the identified editing target.

In particular, the mobile terminal 100 may synthesize a graphic object into the first image. The graphic object may be text, a line, a diagram, an icon, an image, or a video.

Meanwhile, the mobile terminal 100 calculates 3D position information of the identified editing target corresponding to a first observation angle of the identified editing target, generates a 3D graphic object according to the 3D position information, and then synthesize the generated 3D graphic object into the first image.

Or, the mobile terminal may calculate 3D position information of the identified editing target corresponding to the first observation angle of the identified editing target, transform the identified editing target such that it corresponds to the second observation angle by using the 3D position information, and then edit the first image of the transformed editing target.

And then, the mobile terminal 100 applies the edited first image and the second image corresponding to the edited first image to the 3D image (S1030). Here, the second image may be a right image or a left image corresponding to the left image or the right image, respectively.

In this case, the mobile terminal 100 may synthesize the graphic object into the second image in consideration of a binocular disparity, and apply the synthesized first image and the synthesized second image into the 3D image.

in this case, the mobile terminal 100 may apply the same editing as that with respect to the first image of the transformed editing target to the second image in consideration of a binocular disparity, and transform again the transformed editing target such that it corresponds to the first observation angle by using the 3D position information.

Or, the mobile terminal 100 may generate the second image from the first image of the transformed editing target in consideration of a binocular disparity, and transform again the transformed editing target such that it corresponds to the first observation angle by using the 3D position information.

Thereafter, the mobile terminal 100 may adjust the position or direction of the editing target in the 3D image according to a user input (step S1040).

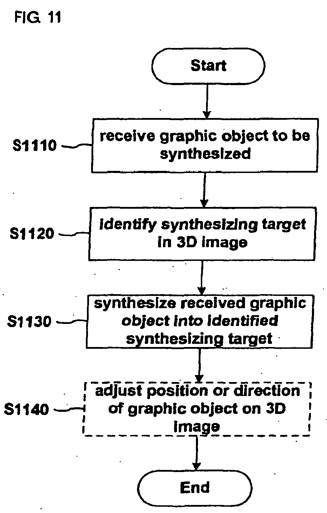

FIG. 11 is a flow chart illustrating the process of a method for adjusting a depth scaling of an image according to another exemplary embodiment of the present disclosure.

With reference to FIG. 11, first, the mobile terminal 100 receives a graphic object to be synthesized (step S1110).

The mobile terminal 100 identifies a synthesizing target from the 3D image (step S1120). In this case, the mobile terminal 100 may discriminately displays a target into which the graphic object can be synthesized, and identify a target selected by the user as the synthesizing target. In particular, when the graphic object is shifted or moved, the mobile terminal 100 may discriminately display a target into which the graphic object can be synthesized among targets close to the graphic object.

Next, the mobile terminal 100 synthesizes the inputted graphic object into the identified synthesizing target (step S1130).

And then, the mobile terminal 100 may adjust the position or direction of the graphic object in the 3D image according to a user input (step S1140).

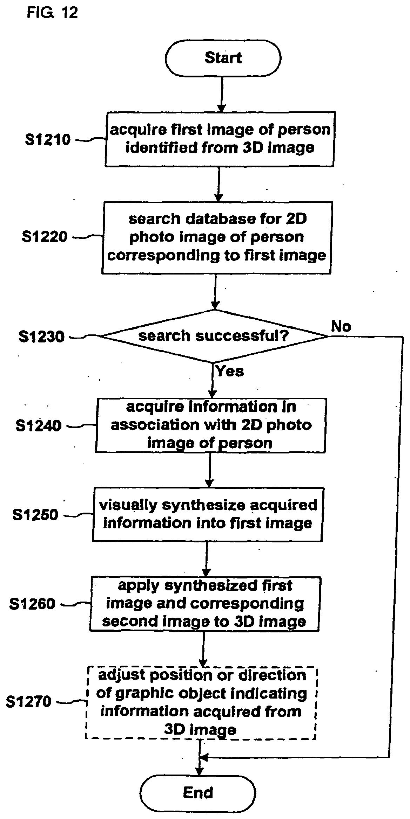

FIG. 12 is a flow chart illustrating the process of a method for adjusting a depth scaling of an image according to still another exemplary embodiment of the present disclosure.

With reference to FIG. 12, first, the mobile terminal 100 acquires a first image of a person identified from a 3D image (step S1020). And, the mobile terminal 100 searches the database for a 2D person photo image which corresponds with the first image (step S1220).

Next, when the searching is successful, the mobile terminal 100 acquires information associated with the 2D person photo image from the database (step S1240), visually synthesizes the acquired information into the first image (step S1250), and applies the synthesized first image and the second image corresponding to the synthesized first image to the 3D image (step S1260).

In this case, the mobile terminal may synthesize the acquired information into the second image in consideration of a binocular disparity, and apply the synthesized first image and the synthesized second image to the 3D image.

And then, the mobile terminal 100 may adjust the position or direction of the graphic object indicating the acquired information in the 3D image according to a user input (step S1270).

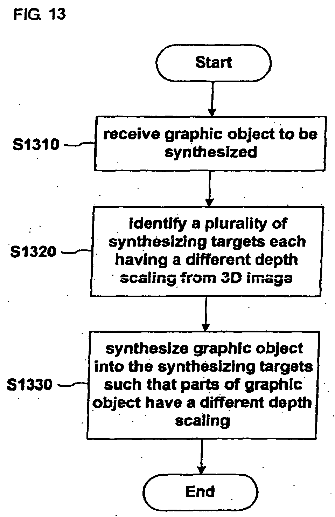

FIG. 13 is a flow chart illustrating the process of a method for adjusting a depth scaling of an image according to yet another exemplary embodiment of the present disclosure.

With reference to FIG. 13, first, the mobile terminal 100 receives a graphic object to be synthesized (step S1310). And, the mobile terminal identifies a plurality of synthesizing targets each having a different depth scaling in a 3D image (step S1320).

Next, the mobile terminal 100 synthesizes the graphic object into the synthesizing targets such that the graphic object has a different depth scaling by the parts overlapping with the respective synthesizing targets (step S1330). In this case, the mobile terminal 100 may visually synthesize the graphic object into a first image and a second image corresponding to the first image of the synthesizing targets.

The method of adjusting the depth scaling of an image according to an exemplary embodiment of the present disclosure can be similarly understood as described above with respect to the mobile terminal according to the exemplary embodiments of the present disclosure with reference to FIGS. 1 to 9, so a detailed description thereof will be omitted.

In the embodiments of the present disclosure, the above-described method can be implemented as codes that can be read by a processor in a program-recorded medium. The processor-readable medium includes a ROM, a RAM, a CD-ROM, a magnetic tape, a floppy disk, an optical data storage device, and the like. The processor-readable medium also includes implementations in the form of carrier waves or signals (e.g., transmission via the Internet).

The mobile terminal according to the embodiments of the present disclosure is not limited in its application of the configurations and methods, but the entirety or a portion of the embodiments can be selectively combined to be configured into various modifications.

The exemplary embodiments of the present disclosure have been described with reference to the accompanying drawings.

The terms used in the present application are merely used to describe particular embodiments, and are not intended to limit the present disclosure.

As the exemplary embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, are intended to be embraced by the appended claims.

## Claims

1. A method for controlling a mobile terminal (100), the method comprising:
displaying a first image and a second image, the first and second images reflecting a binocular disparity to form a three dimensional image;
identifying (S010) at least one editing target from the three dimensional image according to a user input;
determining 3D position information of the editing target, the 3D position information comprising an x-axis rotation value, a y-axis rotation value and a z-axis depth value corresponding to a first observation angle at which the user views the editing target;
transforming the editing target to correspond to a second observation angle at which a user views the front side of the editing target;
synthesizing a 3D object into the transformed editing target of the first image;
synthesizing the 3D object, into the transformed editing target of the second image in consideration of the binocular disparity;
retransforming the transformed editing target including the 3D object such that it corresponds to the first observation angle; and
synthesizing the retransformed editing target into the first and second images.

2. The method of claim 1, further comprising:
searching information associated with a human face from a database, if the at least one editing target includes the human face, wherein the searched information includes at least one of a name, an address, a phone number, an e-mail address, a messenger ID, a memo and a birthday, and
wherein the 3D object includes the searched information.

3. The method of claim 1, wherein when the at least one editing target includes a plurality of editing targets each having a different depth value in the three dimensional image, each part of the 3D object has a different depth value according to the plurality of editing targets.

4. The method of claim 1, further comprising:
adjusting a position or direction of the 3D object on the three dimensional image according to a user input after synthesizing the 3D object into the three dimensional image.

5. A mobile terminal (100), comprising:
a display unit (151) configured to display a three dimensional image which includes a first image and a second image, the first and second images reflecting a binocular disparity to form the three dimensional image; and
a controller (180) configured to:
identify (S1010) at least one editing target from the three dimensional image according to a user input,
determine 3D position information of the editing target, the 3D position information comprising an x-axis rotation value, a y-axis rotation value and a z-axis depth value corresponding to a first observation angle at which the user views the editing target;
transform the editing target to correspond to a second observation angle at which a user views the front side of the editing target;
synthesize a 3D object into the transformed editing target of the first image;
synthesize the 3D object, into the transformed editing target of the second image in consideration of the binocular disparity;
retransform the transformed editing target including the 3D object such that it corresponds to the first observation angle; and
synthesize the retransformed editing target into the first and second images.

6. The mobile terminal (100) of claim 5, wherein the controller (180) is further configured to search information associated with a human face from a database, if the at least one editing target includes the human face, wherein the searched information includes at least one of a name, an address, a phone number, an e-mail address, a messenger ID, a memo and a birthday, and wherein the 3D object includes the searched information.

7. The mobile terminal (100) of claim 5, when the at least one editing target includes a plurality of editing targets each having a different depth value in the three dimensional image, each part of the 3D object has a different depth value according to the plurality of editing targets.

8. The mobile terminal (100) of claim 5, wherein the controller (180) is further configured to adjust a location or direction of the 3D object on the three dimensional image according to a user input.

## Patentansprüche

1. Verfahren zum Steuern eines mobilen Endgeräts (100), wobei das Verfahren aufweist:
Anzeigen eines ersten Bilds und eines zweiten Bilds, wobei die ersten und zweiten Bilder eine binokulare Disparität widerspiegeln, um ein dreidimensionales Bild zu erzeugen;
Identifizieren (S010) wenigstens eines Editierziels aus dem dreidimensionalen Bild entsprechend einer Benutzereingabe;
Bestimmen von 3D-Positionsinformationen des Editierziels, wobei die 3D-Informationen einen x-Achsen-Drehwert, einen y-Achsen-Drehwert und einen z-Achsen-Tiefenwert aufweisen, die einem ersten Beobachtungswinkel entsprechen, in dem der Benutzer das Editierziel betrachtet;
Transformieren des Editierziels, so dass es einem zweiten Beobachtungswinkel entspricht, in dem ein Benutzer die Vorderseite des Editierziels betrachtet;
Synthetisieren eines 3D-Objekts in das transformierte Editierziel des ersten Bilds;
Synthetisieren des 3D-Objekts in das transformierte Editierziel des zweiten Bilds unter Berücksichtigung der binokularen Disparität;
erneutes Transformieren des transformierten Editierziels einschließlich des 3D-Objekts, so dass es dem ersten Beobachtungswinkel entspricht; und
Synthetisieren des erneut transformierten Editierziels in die ersten und zweiten Bilder.

2. Verfahren nach Anspruch 1, das ferner aufweist:
Suchen von Informationen, die zu einem menschlichen Gesicht gehören, aus einer Datenbank, wenn das wenigstens eine Editierziel das menschliche Gesicht umfasst, wobei die gesuchten Informationen einen Namen und/oder eine Adresse und/oder eine Telefonnummer und/oder eine Emailadresse und/oder eine Messenger-ID und/oder eine Notiz und/oder einen Geburtstag umfassen, und
wobei das 3D-Objekt die gesuchten Informationen umfasst.

3. Verfahren nach Anspruch 1, wobei das wenigstens eine Editierziel mehrere Editierziele umfasst, die jeweils einen verschiedenen Tiefenwert in dem dreidimensionalen Bild haben, wobei jeder Teil des 3D-Objekts entsprechend den mehreren Editierzielen einen verschiedenen Tiefenwert hat.

4. Verfahren nach Anspruch 1, das ferner aufweist:
Einstellen einer Position oder Richtung des 3D-Objekts auf dem dreidimensionalen Bild entsprechend einer Benutzereingabe, nachdem das 3D-Objekt in das dreidimensionale Bild synthetisiert wurde.

5. Mobiles Endgerät (100), das aufweist:
eine Anzeigeeinheit (151), die konfiguriert ist, um ein dreidimensionales Bild anzuzeigen, das ein erstes Bild und ein zweites Bild umfasst, wobei die ersten und zweiten Bilder eine binokulare Disparität widerspiegeln, um das dreidimensionale Bild zu erzeugen; und
eine Steuerung (180), die konfiguriert ist, um:
wenigstens ein Editierziel aus dem dreidimensionalen Bild entsprechend einer Benutzereingabe zu identifizieren (S1010),
3D-Positionsinformationen des Editierziels zu bestimmen, wobei die 3D-Informationen einen x-Achsen-Drehwert, einen y-Achsen-Drehwert und einen z-Achsen-Tiefenwert aufweisen, die einem ersten Beobachtungswinkel entsprechen, in dem der Benutzer das Editierziel betrachtet;
das Editierziel zu transformieren, so dass es einem zweiten Beobachtungswinkel entspricht, in dem ein Benutzer die Vorderseite des Editierziels betrachtet;
ein 3D-Objekt in das transformierte Editierziel des ersten Bilds zu synthetisieren;
das 3D-Objekt in das transformierte Editierziel des zweiten Bilds unter Berücksichtigung der binokularen Disparität zu synthetisieren;
das transformierte Editierziel einschließlich des 3D-Objekts erneut zu transformieren, so dass es dem ersten Beobachtungswinkel entspricht; und
das erneut transformierte Editierziel in die ersten und zweiten Bilder zu synthetisieren.

6. Mobiles Endgerät (100) nach Anspruch 5, wobei die Steuerung (180) ferner konfiguriert ist, um Informationen, die zu einem menschlichen Gesicht gehören, aus einer Datenbank zu suchen, wenn das wenigstens eine Editierziel das menschliche Gesicht umfasst, wobei die gesuchten Informationen einen Namen und/oder eine Adresse und/oder eine Telefonnummer und/oder eine Emailadresse und/oder eine Messenger-ID und/oder eine Notiz und/oder einen Geburtstag umfassen, und wobei das 3D-Objekt die gesuchten Informationen umfasst.

7. Mobiles Endgerät (100) nach Anspruch 5, wobei das wenigstens eine Editierziel mehrere Editierziele umfasst, die jeweils einen verschiedenen Tiefenwert in dem dreidimensionalen Bild haben, wobei jeder Teil des 3D-Objekts entsprechend den mehreren Editierzielen einen verschiedenen Tiefenwert hat.

8. Mobiles Endgerät (100) nach Anspruch 5, wobei die Steuerung (180) ferner konfiguriert ist, um einen Ort oder eine Richtung des 3D-Objekts auf dem dreidimensionalen Bild entsprechend einer Benutzereingabe einzustellen.

## Revendications

1. Procédé pour commander un terminal mobile (100), le procédé comprenant :
l'affichage d'une première image et d'une deuxième image, les première et deuxième images reflétant une disparité binoculaire pour former une image tridimensionnelle ;
l'identification (S010) d'au moins une cible d'édition à partir de l'image tridimensionnelle en fonction d'une entrée d'utilisateur ;
la détermination d'informations de position 3D de la cible d'édition, les informations de position 3D comprenant une valeur de rotation d'axe x, une valeur de rotation d'axe y et une valeur de profondeur d'axe z correspondant à un premier angle d'observation suivant lequel l'utilisateur visualise la cible d'édition ;
la transformation de la cible d'édition pour correspondre à un deuxième angle d'observation suivant lequel un utilisateur visualise la vue de face de la cible d'édition ;
la synthèse d'un objet 3D dans la cible d'édition transformée de la première image ;
la synthèse de l'objet 3D dans la cible d'édition transformée de la deuxième image compte tenu de la disparité binoculaire ;
la retransformation de la cible d'édition transformée comprenant l'objet 3D de manière qu'elle corresponde au premier angle d'observation ; et
la synthèse de la cible d'édition retransformée dans les première et deuxième images.

2. Procédé selon la revendication 1, comprenant en outre :
la recherche d'informations associées à un visage humain dans une base de données, si l'au moins une cible d'édition comprend le visage humain, dans lequel les informations recherchées comprennent au moins un parmi un nom, une adresse, un numéro de téléphone, une adresse de courriel, un identifiant de messagerie, un mémo et une date d'anniversaire, et
dans lequel l'objet 3D comprend les informations recherchées.

3. Procédé selon la revendication 1, dans lequel, quand l'au moins une cible d'édition comprend une pluralité de cibles d'édition ayant chacune une valeur de profondeur différente dans l'image tridimensionnelle, chaque partie de l'objet 3D a une valeur de profondeur différente en fonction de la pluralité de cibles d'édition.

4. Procédé selon la revendication 1, comprenant en outre :
le réglage d'une position ou direction de l'objet 3D sur l'image tridimensionnelle en fonction d'une entrée d'utilisateur après la synthèse de l'objet 3D dans l'image tridimensio nnelle.

5. Terminal mobile (100) comprenant :
une unité d'affichage (151) configurée pour afficher une image tridimensionnelle qui comprend une première image et une deuxième image, les première et deuxième images reflétant une disparité binoculaire pour former l'image tridimensionnelle ; et
un contrôleur (180) configuré pour :
identifier (S1010) au moins une cible d'édition à partir de l'image tridimensionnelle en fonction d'une entrée d'utilisateur,
déterminer des informations de position 3D de la cible d'édition, les informations de position 3D comprenant une valeur de rotation d'axe x, une valeur de rotation d'axe y et une valeur de profondeur d'axe z correspondant à un premier angle d'observation suivant lequel l'utilisateur visualise la cible d'édition ;
transformer la cible d'édition pour correspondre à un deuxième angle d'observation suivant lequel un utilisateur visualise la vue de face de la cible d'édition ;
synthétiser un objet 3D dans la cible d'édition transformée de la première image ;
synthétiser l'objet 3D dans la cible d'édition transformée de la deuxième image compte tenu de la disparité binoculaire ;
retransformer la cible d'édition transformée comprenant l'objet 3D de manière qu'elle corresponde au premier angle d'observation ; et
synthétiser la cible d'édition retransformée dans les première et deuxième images.

6. Terminal mobile (100) selon la revendication 5, dans lequel le contrôleur (180) est configuré en outre pour rechercher des informations associées à un visage humain dans une base de données, si l'au moins une cible d'édition comprend le visage humain, dans lequel les informations recherchées comprennent au moins un parmi un nom, une adresse, un numéro de téléphone, une adresse de courriel, un identifiant de messagerie, un mémo et une date d'anniversaire, et dans lequel l'objet 3D comprend les informations recherchées.

7. Terminal mobile (100) selon la revendication 5, quand l'au moins une cible d'édition comprend une pluralité de cibles d'édition ayant chacune une valeur de profondeur différente dans l'image tridimensionnelle, chaque partie de l'objet 3D a une valeur de profondeur différente en fonction de la pluralité de cibles d'édition.

8. Terminal mobile (100) selon la revendication 5, dans lequel le contrôleur (180) est configuré en outre pour régler une position ou direction de l'objet 3D sur l'image tridimensionnelle en fonction d'une entrée d'utilisateur.
